# FASCICULE DE BREVET EUROPEEN

(11) **EP 0 994 263 B1**
(45) Date de publication et mention de la délivrance du brevet: **14.05.2003**
(21) Numéro de dépôt: 99402407.3
(22) Date de dépôt: 01.10.1999
(51) Int. Cl.: F16B 41/00, B60B 3/16, E05B 47/00

(54) **Dispositif de protection antivol pour une roue de véhicule automobile**
Antidiebstahlvorrichtung für ein Kraftfahrzeugrad
Anti-theft protection device for a motor vehicle wheel

(30) Priorité: 13.10.1998 FR 9812805
(43) Date de publication de la demande: 19.04.2000
(73) Titulaire: AUTOMOBILES PEUGEOT, 75116 Paris (FR); AUTOMOBILES CITROEN, 92200 Neuilly-sur-Seine (FR)
(72) Inventeur: Lefranc, Jean-Louis, 60119 Neuville Bosc (FR); Jomin, Nicolas, 77450 Esbly (FR)
(74) Mandataire: Thinat, Michel

(56) Documents cités:
- EP-A- 0 463 744
- DE-A- 2 034 802
- DE-A- 3 520 452
- DE-U- 29 606 408
- FR-A- 2 587 422
- US-A- 4 617 448

## Description

La présente invention concerne un dispositif de protection antivol pour une roue de véhicule automobile.

On connaît un tel dispositif selon lequel la vis de fixation de la roue sur le moyeu de roue a une tête d'une forme particulière ne correspondant pas aux empreintes des clés standards de desserrage et un capuchon de forme conjuguée à la tête de vis et rapporté sur cette tête, est nécessaire pour permettre le desserrage de la vis de fixation par une clé standard.

Cependant, ce dispositif connu a pour inconvénient majeur de nécessiter des têtes de vis de fixation de forme particulière, augmentant ainsi les coûts de fabrication, et le risque de perte du capuchon spécialement adapté à la tête de vis pour son serrage ou son desserrage, empêchant alors l'utilisateur de changer sa roue notamment en cas de crevaison.

Le document US-A-4 617 448 montre un dispositif destiné à la fixation d'un élément mobile d'un appareil mais qui n'est pas employé comme système antivol.

La présente invention a pour but d'éliminer les inconvénients ci-dessus en proposant un dispositif de protection antivol pour une roue de véhicule montée sur le moyeu de roue au moyen d'au moins un élément fileté de fixation amovible manoeuvrable par un outil comprenant les caractéristiques de la revendication 1.

Selon un mode de réalisation préféré, l'obstacle comprend un capuchon coiffant l'élément fileté de fixation et constitué d'une partie externe et d'une partie interne pouvant pivoter de façon limitée dans la partie externe autour d'un axe longitudinal de pivotement entre une position de verrouillage du capuchon à l'élément fileté de fixation sous l'action d'un premier couple de forces exercé sur la partie interne par deux ressorts de rappel disposés symétriquement à l'axe de pivotement de façon à empêcher le retrait axial du capuchon de l'élément fileté de fixation et une position de déverrouillage sous l'action d'un second couple de forces opposé et supérieur au premier couple de forces, exercé par deux organes à mémoire de forme thermosensibles symétriques à l'axe de pivotement et chauffés à la température minimum déterminée de façon à permettre le retrait axial du capuchon de l'élément fileté de fixation.

Les deux organes à mémoire de forme thermosensibles sont montés sur la partie interne du capuchon et sont constitués chacun par une lame cintrée en alliage de préférence de nickel-titane.

Les deux ressorts de rappel sont également montés sur la partie interne du capuchon et sont constitués chacun par un ressort en épingle dont les deux branches sont en appui précontraint respectivement sur une paroi de butée radialement interne de la partie interne du capuchon et une paroi de butée radialement interne de la partie externe de celui-ci et la spire de liaison des deux branches est montée autour d'un axe de la partie interne parallèle à l'axe de pivotement de celle-ci de façon à rappeler élastiquement la partie interne vers une paroi de butée de la partie externe et restituer la forme initiale de chaque organe à mémoire de forme après refroidissement de celui-ci.

Chaque lame à mémoire de forme a l'une de ses extrémités maintenue entre deux parois parallèles radialement internes de la partie externe du capuchon et son autre extrémité située entre la paroi de butée de la partie externe sur laquelle vient en appui la partie interne en position de verrouillage et la paroi de butée de la partie interne sur laquelle est en appui la branche correspondante du ressort en épingle.

Les moyens de verrouillage de la partie interne du capuchon à l'élément fileté de fixation comprennent deux pattes symétriques à ergots de verrouillage radialement internes s'engageant respectivement dans deux portions de gorges diamétralement opposées de l'élément fileté de fixation en position de verrouillage, les deux ergots de verrouillage pouvant coulisser dans les deux portions de gorges lors du pivotement de la partie interne jusqu'à sa position de déverrouillage à laquelle les ergots sont libérés des portions de gorges pour permetre le retrait axial du capuchon.

Les parties interne et externe du capuchon sont fixées amoviblement l'une à l'autre par deux pattes latérales flexibles diamétralement opposées et découpées dans la paroi latérale annulaire de la partie externe du capuchon et comportant à leurs extrémités inférieures des saillies de verrouillage coopérant avec la partie interne pour la bloquer axialement dans la partie externe du capuchon.

Les parties interne et externe du capuchon sont réalisées en zamak nickelé.

Un moyen préhenseur et de chauffage du capuchon est prévu pour autoriser le retrait du capuchon de l'élément fileté de fixation lors du chauffage des deux organes à mémoire de forme à la température minimum prédéterminée.

Selon un deuxième mode de réalisation, l'obstacle comprend un capuchon coiffant l'élément fileté de fixation et fixé amoviblement à l'élément fileté de fixation, en position d'utilisation, par au moins un levier de verrouillage monté pivotant dans le capuchon et pouvant basculer à une position de déverrouillage sous la commande de l'organe à mémoire de forme thermosensible chauffé pour permettre le retrait axial du capuchon de l'élément fileté de fixation.

Le levier de verrouillage comprend deux bras de levier coudés sensiblement à angle droit respectivement un premier bras de levier sensiblement parallèle à l'axe longitudinal du capuchon en position de verrouillage et comportant à son extrémité libre un ergot de verrouillage radialement interne s'engageant dans un évidement conjugué de l'élément fileté de fixation et un second bras de levier perpendiculaire à l'axe longitudinal du capuchon en position de verrouillage, l'organe à mémoire de forme étant disposé entre le second bras de levier et la paroi supérieure de fermeture du capuchon de façon à faire pivoter le premier bras de levier à sa position de déverrouillage lorsque ledit organe est chauffé à la température minimum déterminée.

L'organe à mémoire de forme est en forme de ressort hélicoïdal disposé coaxialement dans le capuchon et s'allongeant lorsque chauffé à la température minimum déterminée.

Le levier est rappelé en position de verrouillage par un ressort en forme de lame convexe interposé entre le second bras de levier et la paroi latérale du capuchon.

Avantageusement, on prévoit trois leviers de verrouillage s'étendant angulairement sensiblement à 120° les uns des autres autour de l'élément fileté de fixation et l'organe à mémoire de forme agit simultanément sur les trois leviers de verrouillage pour les déverrouiller lorsque l'organe est chauffé à la température minimum déterminée.

Un moyen préhenseur et de chauffage de capuchon est prévu pour autoriser le retrait du capuchon de l'élément fileté de fixation lors du chauffage de l'organe à mémoire de forme à la température minimum déterminée.

Selon un troisième mode de réalisation, l'obstacle comprend un capuchon coiffant l'élément fileté de fixation et réalisé sous la forme d'un tronc de cône fendu longitudinalement de manière à constituer deux parties symétriques enserrant au niveau de la petite base du tronc de cône l'élément fileté de fixation en étant verrouillées à celui-ci pour empêcher le retrait axial du capuchon et pouvant être écartées élastiquement l'une de l'autre par l'organe à mémoire de forme chauffé à la température minimum déterminée pour déverrouiller le capuchon de l'élément fileté de fixation.

L'organe à mémoire de forme est constitué par une lame convexe à section sensiblement semi-circulaire disposée debout dans le capuchon sur deux plaques semi-circulaires internes coplanaires supportées respectivement sur deux épaulements semi-circulaires transversaux du tronc de cône de façon qu'en chauffant l'organe à mémoire de forme à la température minimum déterminée, celui-ci exerce sur les deux parties symétriques du tronc de cône deux forces radiales opposées écartant ces deux parties à la position de déverrouillage du capuchon.

Les deux parties symétriques comprennent chacune au moins une saillie radialement interne de verrouillage s'engageant en position de verrouillage dans un évidement conjugué de l'élément fileté de fixation.

Les deux plaques semi-circulaires sont réalisées en un matériau électriquement isolant et la lame à mémoire de forme est logée dans le capuchon en étant électriquement isolée de celui-ci.

Un moyen de préhension et de chauffage du capuchon est prévu pour autoriser le retrait du capuchon de l'élément fileté de fixation lors du chauffage de l'organe à mémoire de forme à la température minimum déterminée.

Selon un quatrième mode de réalisation, l'obstacle comprend une bague logée dans un lamage de la jante de roue coaxialement à l'élément fileté de fixation en entourant de façon adjacente cet élément et la bague est immobilisée axialement dans le lamage par l'organe à mémoire de forme en anneau logé d'une part dans une gorge radialement externe de la bague et d'autre part dans une rainure circulaire réalisée dans la paroi latérale de la jante définissant le passage de l'élément fileté de fixation de façon à retenir axialementla bague relativement à la jante en position, d'utilisation, l'anneau à mémoire de forme se rétractant par chauffage à la température minimum déterminée dans la gorge de la begue pour libérer axialement celle-ci.

L'anneau à mémoire de forme est fendu et a l'une de ses extrémités libres recourbée sensiblement à angle droit pénétrant dans un évidemment conjugué réalisé au fond de la gorge de la bague d'obstacle de façon à contracter mécaniquement, à l'aide d'un outil approprié, l'anneau par rapprochement de ses extrémités pour son montage dans la rainure circulaire.

Cet outil est également agencé comme moyen de préhension et de chauffage de la bague pour autoriser le retrait de celle-ci et de l'organe à mémoire de forme en anneau lors du chauffage de cet organe à la température minimum déterminée.

L'invention sera mieux comprise et d'autres buts, et avantages de celle-ci apparaîtront plus clairement dans la description explicative qui va suivre faite en référence aux dessins schématiques annexés illustrant plusieurs modes de réalisation de l'invention et dans lesquels.

La figure 1 représente une vue en perspective arrachée du dispositif de protection antivol selon un premier mode de réalisation de l'invention.

La figure 2 est une vue en perspective de l'intérieur du dispositif de protection antivol de la figure 1 en position de verrouillage.

La figure 3 est une vue en perspective semblable à celle de la figure 2 représentant le dispositif en position de déverrouillage.

La figure 4 est une vue en perspective de la partie externe du dispositif de protection antivol de la figure 1.

La figure 5 est une vue en coupe d'un dispositif de protection antivol suivant un deuxième mode de réalisation de l'invention.

La figure 6 est une vue en coupe suivant la ligne VI-VI de la figure 5.

La figure 7 est une vue semblable à celle de la figure 5 et représentant le dispositif en position de déverrouillage.

La figure 8 est une vue en coupe représentant un dispositif de protection antivol suivant un troisième mode de réalisation de l'invention.

La figure 9 est une vue en coupe suivant la ligne IX-IX de la figure 8.

La figure 10 est une vue semblable à celle de la figure 8 et représentant le dispositif en position de déverrouillage.

La figure 11 est une vue en coupe représentant un dispositif de protection antivol suivant un quatrième mode de réalisation de l'invention.

La figure 12 est une vue en coupe suivant la ligne XII-XII de la figure 11.

La figure 13 est une vue semblable à celle de la figure 11 et représentant le dispositif en position de déverrouillage.

Les figures 14A à 14D représentent le procédé de pose du dispositif de protection antivol des figures 11 à 13.

Les figures 15A à 15E représentent le procédé de déverrouillage du dispositif antivol des figures 11 à 13.

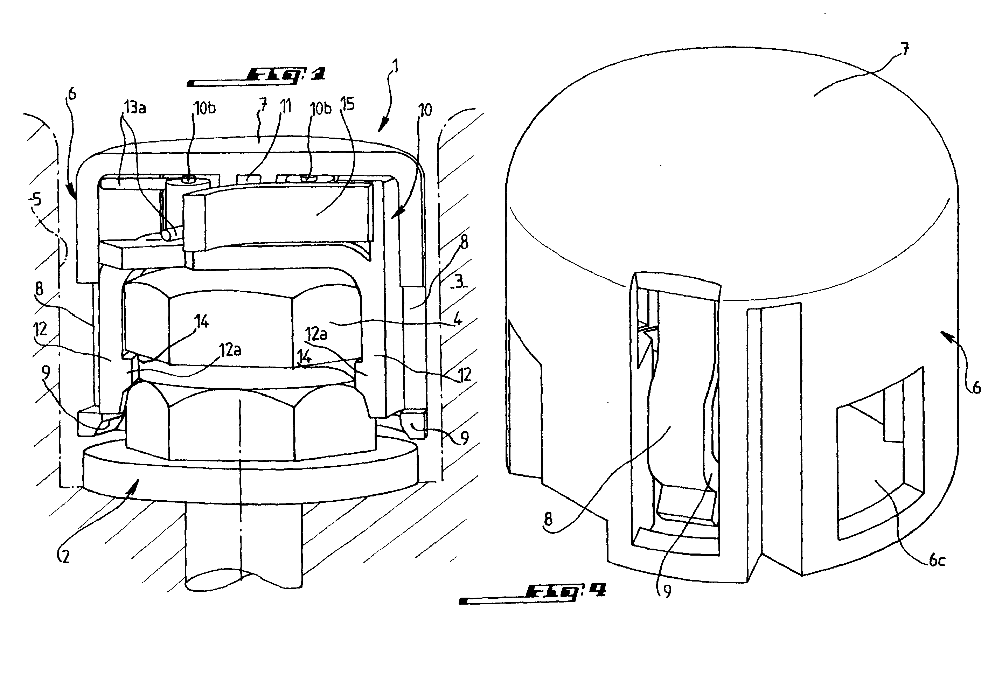

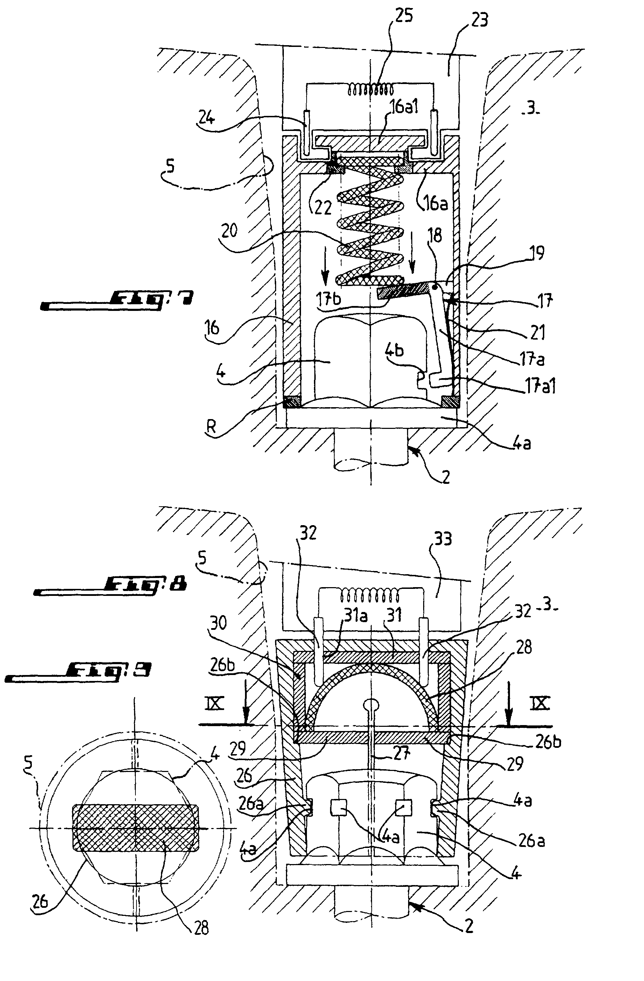

Les figures 1 à 4 représentent le premier mode de réalisation du dispositif de protection antivol de l'invention.

Ce dispositif comprend un capuchon généralement référencé en 1 fixé amoviblement à une vis 2 de fixation de la jante 3 d'une roue d'un véhicule au moyeu de roue.

Plus précisément, le capuchon 1 coiffe la tête 4 de la vis de fixation 2 en étant logé dans un puits 5 de la jante 3 de façon à constituer un obstacle à l'accès de la tête 4 de vis de fixation 2 par un outil.

Le capuchon 1 comprend une partie externe 6 formant le capuchon proprement dit, de forme cylindrique fermé à son extrémité supérieure par une paroi circulaire 7 et comportant deux pattes flexibles latérales diamétralement opposées 8 découpées dans la paroi latérale de la partie externe 6 et comportant à leurs extrémités libres des saillies 9 permettant de verrouiller à la partie externe 6 une partie interne 10 du capuchon 1 pour former un ensemble unitaire.

La partie interne 10 du capuchon 1 est montée de façon pivotante suivant un angle de pivotement limité dans la partie externe 6 autour d'un axe longitudinal de pivotement 11 solidaire de la paroi supérieure 7 de la partie externe 6. Cette partie interne 10 comprend des moyens de verrouillage de celle-ci à la tête 4 de la vis de fixation 2 et constitués par deux pattes longitudinales diamétralement opposées 12 comportant respectivement deux ergots de verrouillage 12a radialement internes s'engageant chacun dans une portion de gorge 14 usinée dans la tête 4 de la vis de fixation 2 de façon à empêcher le retrait axial du capuchon 1 relativement à la vis de fixation 2.

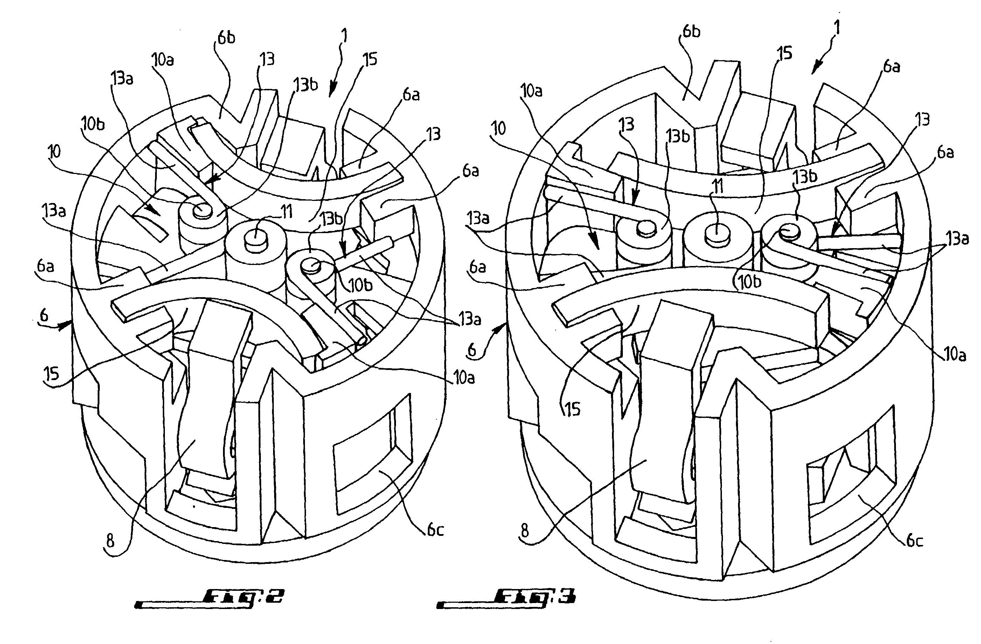

La partie interne 10 comprend en outre sur sa partie supérieure deux ressorts 13 disposés symétriquement à l'axe 11 et permettant d'exercer un couple de forces de rappel de la partie interne 10 à une position angulaire extrême à laquelle les deux pattes 12 ont leurs ergots de verrouillage 12a engagés respectivement dans les deux portions de gorges 14. Chaque ressort de rappel 13 est constitué par un ressort en épingle dont les deux branches 13a sont en appui précontraint respectivement sur une paroi de butée radialement interne 10a de la partie interne 10 et une paroi de butée radialement interne 6a de la partie externe 6 et la spire 13b de liaison des branches 13a est montée sur un axe 10b de la partie interne 10 parallèle à l'axe de pivotement 11, de façon à rappeler élastiquement la partie interne 10 vers une paroi de butée 6b de la partie externe 6 comme représenté en figure 2.

La partie interne 10 comprend également à sa partie supérieure deux organes à mémoire de forme thermosensibles 15 disposés symétriquement à l'axe 11 et permettant, lorsque chauffés à une température minimum déterminée, de retrouver leur forme initiale et d'exercer sur la partie interne 10 un couple de forces opposé et supérieur à celui exercé par les deux ressorts de rappel 13 pour amener les deux pattes 12 à une position dégagée de déverrouillage des gorges 14 de la tête 4 de la vis de fixation 2. Les deux organes à mémoire de forme 15 sont constitués chacun par une lame cintrée en position de verrouillage de la partie interne 10 à la vis de fixation 2 et dont l'une de ses extrémités est maintenue entre deux parois parallèles radialement internes 6a de la partie externe 6 et l'autre extrémité est située entre la paroi de butée 6b de la partie externe 6 vers laquelle vient en appui la partie interne 10 en position de verrouillage et la paroi de butée 10a de la partie interne 10 sur laquelle est en appui la branche correspondante 13a du ressort en épingle 13.

De préférence, chaque lame à mémoire de forme est en alliage de nickel-titane retrouvant sa forme par simple chauffage au-delà de 80°C et la partie externe 6 du bouchon 1 est réalisée en zamak nickelé tandis que la partie interne 10 de celui-ci est réalisée en zamak nickelé ou en bérylium-aluminium permettant d'obtenir des pièces de fonderie de précision et offrant un bon couple galvanique avec les organes à mémoire de forme 15.

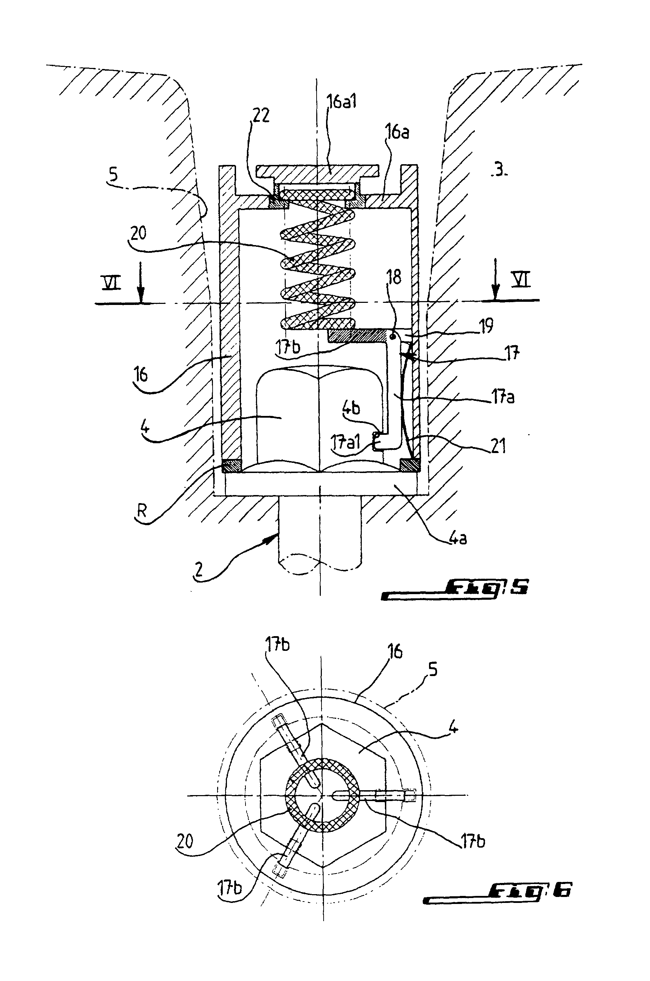

Pour retirer le capuchon 1 de la tête 4 de la vis de fixation 2, l'utilisateur dispose d'un outil de préhension et de chauffage permettant de chauffer les deux lames à mémoire de forme 15 de façon qu'une fois chauffées à la température minimum déterminée, elles se déforment de la configuration de verrouillage du capuchon 1 à la tête de vis 4 représentée en figure 2 à la configuration de déverrouillage de celui-ci représentée à la figure 3. Un tel appareil n'est pas représenté mais peut être aisément conçu comme comprenant un élément chauffant pouvant venir directement en contact avec la partie externe 6 du capuchon 1 afin de chauffer les deux organes à mémoire de forme 15 et deux lames flexibles permettant d'extraire le capuchon 1 en s'engageant dans deux cavités de la paroi latérale de la partie externe 6 telles que celles référées en 6c.

Le fonctionnement du dispositif de protection antivol va être maintenant décrit.

A des températures inférieures à 80°C, les lames à mémoire de forme 15 sont maintenues à la configuration représentée en figure 2 par les deux ressorts de rappel 13 qui exercent une force de rappel, par exemple d'environ 1daN, permettant de maintenir les pattes 12 de la partie interne 10 en position verrouillée à la tête de vis 4, empêchant ainsi toute extraction du capuchon 1 dans le sens axial.

Par chauffage des lames à mémoire de forme 15 au-delà d'une température de 80°C, celles-ci retrouvent leur forme initiale en adoptant la configuration représentée en figure 3 pour fournir un effort, par exemple d'environ 2daN, permettant de faire tourner la partie interne 10 relativement à la partie 6 tout en comprimant les ressorts de rappel 13. Les pattes de verrouillage 12 coulissent alors dans leurs portions de gorges respectives 14 jusqu'à une position angulaire déterminée à laquelle elles sont libérées de ces portions de gorges pour permettre alors d'extraire le capuchon 1 par l'appareil préhenseur de chauffage.

Une fois les lames à mémoire de forme refroidies, les ressorts de rappel 13 ramènent la partie interne 10 à la position représentée en figure 2 à laquelle ils déforment les lames 15 à leur configuration représentée également à cette figure. Pour verrouiller à nouveau le capuchon 1 à la tête 4, il suffit d'exercer une pression mécanique sur celui-ci pour forcer les ergots 12a des deux pattes de verrouillage 12 à pénétrer dans les deux portions de gorges respectives 14.

Le dispositif de protection antivol ci-dessus décrit présente de nombreux avantages, à savoir notamment une réduction de la hauteur de celui-ci au-dessus de la tête de vis, un faible effort exigé aux organes à mémoire de forme (verrouillage par rotation), la présence des deux branches latérales 8 de la partie externe 6 assurant une sécurité de maintien en cas d'échauffement par freinage, une compatibilité galvanique entre les organes à mémoire de forme et le matériau de zamak nickelé utilisé notamment pour la partie externe du capuchon, l'extraction du dispositif nécessite un outil préhenseur spécifique, et la partie externe peut être utilisée pour couvrir les têtes de vis non verrouillées.

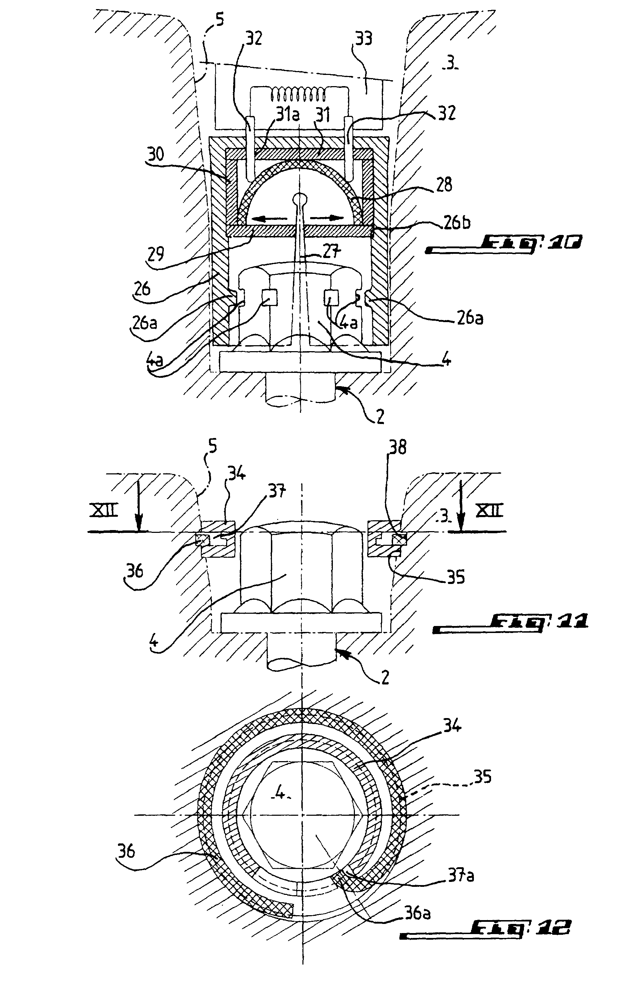

Le dispositif de protection antivol suivant le deuxième mode de réalisation tel que représenté aux figures 5 à 7 comprend un capuchon 16 généralement cylindrique coiffant coaxialement la tête de vis 4 en reposant sur l'embase 4a de la tête 4 par l'intermédiaire d'une rondelle R en un matériau électriquement isolant. Le capuchon 16 est logé dans le puits 5 de roue 3 de façon à empêcher l'accès à la tête de vis 4.

Pour verrouiller le capuchon 16 à la tête de vis 4, le dispositif comprend au moins un levier de verrouillage 17 monté pivotant dans le capuchon 16 autour d'un axe 18 perpendiculaire à l'axe longitudinal du capuchon et porté par une patte de support radiale 19 solidaire de la paroi latérale du capuchon et pouvant basculer entre une position de verrouillage du capuchon 16 à la tête de vis 4 et une position de déverrouillage du capuchon 16 de cette tête sous la commande d'un organe à mémoire de forme thermosensible logé dans le capuchon 16 coaxialement à l'axe de la vis de fixation 2.

Comme représenté, le levier de verrouillage comprend deux bras de levier coudés sensiblement à angle droit, respectivement un premier bras de levier 17a sensiblement parallèle à l'axe longitudinal de l'axe de la vis de fixation 2 en position de verrouillage du capuchon 16 et comportant à son extrémité libre un ergot de verrouillage radialement interne 17a1 s'engageant dans un évidement conjugué 4b de la tête de vis 4 et un second bras de levier 17b perpendiculaire à l'axe longitudinal de la vis 2 ou à l'axe longitudinal du capuchon 16 en position de verrouillage de celui-ci, l'organe à mémoire de forme 20 étant disposé entre le second bras de levier 17b et la paroi supérieure de fermeture 16a du capuchon 16 de façon à faire pivoter par poussée exercée sur le bras de levier 17b le bras de levier 17a à sa position de déverrouillage lorsque l'organe de mémoire de forme 20 est chauffé à une température minimum déterminée, par exemple de 80°C lorsque cet organe est en alliage de nickel-titane.

L'organe à mémoire de forme 20 est de préférence en forme de ressort hélicoïdal s'allongeant lorsque chauffé à la température minimum déterminée.

En outre, le bras de levier 17a du levier de verrouillage 17 est rappelé en position de verrouillage par un ressort 21 en forme de lame convexe interposé entre le bras de levier 17a et la paroi latérale du capuchon 16. Comme représenté, le ressort 21 est monté verticalement arc-bouté en appui à ses deux extrémités respectivement sur la rondelle isolante R et la patte de support 19.

De préférence, le dispositif comprend trois leviers de verrouillage identiques 17 s'étendant angulairement à 120° d'angle les uns des autres autour de la vis de fixation 2 et le ressort hélicoïdal constituant l'organe à mémoire de forme 20 à sa spire inférieure extrême en appui sur les trois bras de levier 17b des leviers de verrouillage 17 de manière à agir simultanément sur ceux-ci lorsque chauffé à la température minimum déterminée pour déverrouiller en même temps les trois leviers 17 de la tête de vis 4.

Le bras de levier 17b de chaque levier de verrouillage 17 est réalisé en un matériau électriquement isolant et thermiquement conducteur et la spire extrême supérieure du ressort constituant l'organe à mémoire de forme 20 est en appui sur un manchon 22 en un matériau électriquement isolant et thermiquement conducteur fixé dans la paroi 16a du capuchon 16 coaxialement à l'axe longitudinal de celui-ci. La paroi 16a du capuchon 16 porte à l'extérieur de celle-ci une partie venant de matière 16a1 et ayant une forme permettant à un appareil externe 23 de saisir et de chauffer le capuchon 16 en vue de l'extraire de la tête de vis 4.

La figure 7 montre que l'appareil préhenseur et de chauffage 23 comprend schématiquement un corps à deux électrodes 24 alimentées par une source d'alimentation 25 permettant de faire circuler dans le corps du capuchon 16, de préférence en zamak nickelé, le courant de chauffage du ressort à mémoire de forme 20.

Lorsque le ressort à mémoire de forme 20 est à une température inférieure à la température minimum déterminée, par exemple de 80°C, les bras de verrouillage 17 occupent leurs positions de verrouillage du capuchon 16 à la tête de vis 4. En chauffant à l'aide de l'appareil préhenseur et de chauffage 23 le ressort à mémoire de forme 20 à une température égale ou supérieure à cette température minimum déterminée, celui-ci s'allonge pour retrouver sa forme et fait basculer simultanément les trois leviers 17 à leurs positions de déverrouillage de façon que l'appareil préhenseur et de chauffage puisse extraire axialement le capuchon 16.

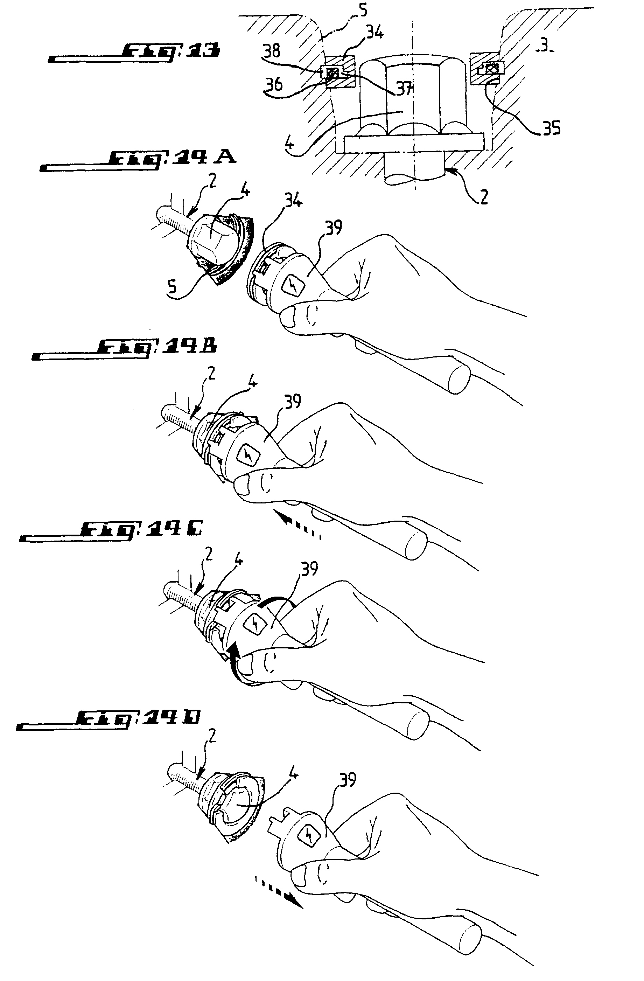

Le dispositif de protection antivol selon le troisième mode de réalisation représenté aux figures 8 à 10 comprend un capuchon 26 coiffant la tête de vis 4 coaxialement à celle-ci en étant logé dans le puits 5 de la jante de roue 3 de façon à constituer un obstacle à l'accès par un outil de la tête de vis 4.

Le capuchon 26 est réalisé sous la forme d'un tronc de cône à fente longitudinale 27 séparant partiellement le tronc de cône en deux parties symétriques enserrant au niveau de la petite base du tronc de cône la tête de vis 4 en y étant verrouillées pour empêcher le retrait axial du capuchon 26 de la tête de vis 4. A cet effet, le capuchon 26 comprend en partie inférieure deux ou plusieurs saillies de verrouillage radialement internes 26a s'engageant respectivement dans deux évidements conjugués 4a de la tête de vis 4.

Le dispositif comprend en outre un organe à mémoire de forme thermosensible 28, réalisé de préférence en alliage de nickel-titane, et agencé de façon qu'en étant chauffé à une température minimum déterminée, par exemple de 80°C, il exerce dans le capuchon 26 deux forces radialement opposées permettant d'écarter l'une de l'autre les deux parties inférieures symétriques du tronc de cône constituant la petite base de celui-ci pour désengager les saillies de verrouillage 26a des évidements conjugués 4a de la tête de vis 4.

A cet effet, l'organe à mémoire de forme 28 est constitué par une lame convexe à section sensiblement semi-circulaire disposée debout dans le capuchon 26 sur deux plaques semi-circulaires internes coplanaires 29 supportées respectivement sur deux épaulements semi-circulaires transversaux internes 26b du tronc de cône du capuchon 26 de façon qu'en chauffant la lame convexe 28 à la température minimum déterminée, celle-ci a ses deux extrémités opposées arc-boutées à la paroi latérale du capuchon 26 s'écartant l'une de l'autre pour écarter également l'une de l'autre les deux plaques semi-circulaires 29 et les deux parties inférieures symétriques du capuchon 26 pour libérer le capuchon 26 de la tête de vis 4 comme représenté en figure 10.

L'organe à mémoire de forme 28 est logé en partie supérieure du capuchon 26 en étant électriquement isolé de celui-ci par une douille cylindrique interne 30 et une plaque circulaire supérieure 31 réalisés en un matériau électrique isolant.

La plaque circulaire 31 comporte deux trous de passage respectivement de deux électrodes 32 d'un appareil préhenseur et de chauffage 33 représenté partiellement et venant en contact directement sur l'organe à mémoire de forme 28 pour le chauffer à la température minimum prédéterminée de déverrouillage du capuchon 26.

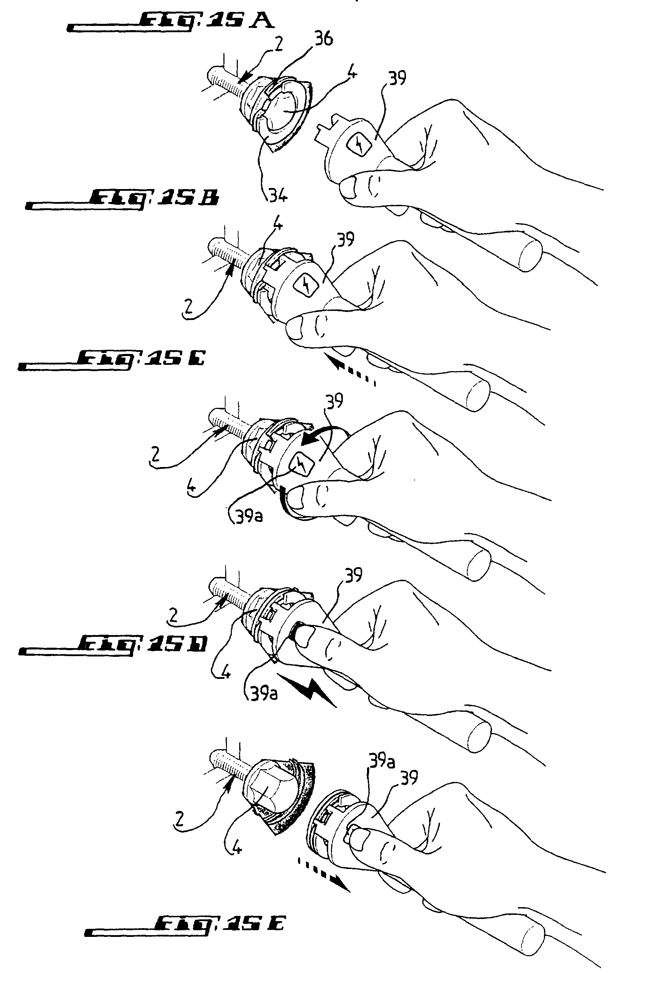

Le dispositif de protection antivol selon le quatrième mode de réalisation représenté aux figures 11 à 13 comprend une bague 34 logée dans un lamage 35 usiné dans le puits 5 de la jante de roue 3 de façon que la bague 34 entoure de façon adjacente la tête de vis 4 coaxialement à celle-ci pour constituer un obstacle d'accès à cette tête de vis par un outil. La bague 34 est immobilisée axialement dans le lamage 35 par un organe à mémoire de forme thermosensible en anneau 36 logé d'une part dans une gorge radialement externe 37 de la bague 34 et d'autre part dans une rainure circulaire 38 réalisée dans la paroi du puits 5 de façon à retenir axialement la bague 34 relativement à la jante 3 en position d'utilisation. L'anneau à mémoire de forme 36 est fendu et a l'une de ses extrémités libre 36a recourbée sensiblement à angle droit et pénétrant dans un évidement conjugué 37a réalisé au fond de la gorge 37 de la bague 34. La partie d'extrémité de l'anneau à mémoire de forme 36 comportant l'extrémité recourbée 36a est cintrée sur l'intérieur du cercle constitué par la partie restante de cet anneau de façon à constituer une forme en spirale permettant, à l'aide d'un outil approprié, l'introduction de l'anneau 36 dans la rainure circulaire 38 lors du montage de la bague d'obstacle 34.

Comme pour les autres modes de réalisation, l'anneau à mémoire de forme 36 peut être réalisé en alliage de nickel-titane lui permettant de retrouver sa forme lorsque chauffé à une température au moins égale à 80°C.

Les figures 14A à 14D montrent les différentes phases de pose du dispositif de protection antivol dans le puits 5 de la jante 3 à l'aide d'un outil approprié 39. Selon la figure 14A, l'outil 39 muni de l'ensemble constitué par la bague 34 et l'anneau à mémoire de forme 36 est présenté devant la vis de fixation 2. Cet outil est agencé de manière à rapprocher l'une de l'autre les deux extrémités de l'anneau à mémoire de forme 36. Ensuite, comme représenté en figure 14B, cet ensemble est inséré par l'outil 39 dans le puits 5 et par rotation de l'outil 39 dans le sens indiqué par la flèche en figure 14C, l'anneau à mémoire de forme 36 est introduit dans la rainure circulaire 38 avec libération des deux extrémités de l'anneau 36. L'outil 39 est alors retiré comme représenté en figure 14D.

Les figures 15A à 15E montrent l'utilisation de l'outil 39 permettant le chauffage de l'anneau à mémoire forme 36 et la saisie de l'ensemble constitué par la bague d'obstacle 34 et cet anneau. La figure 15A montre que l'outil 39 est présenté devant la vis de fixation 2 et est ensuite inséré dans le puits 5 comme représenté en figure 15B. L'outil 39 est alors tourné comme indiqué par la flèche en figure 15C pour rapprocher l'une de l'autre les deux extrémités de l'anneau à mémoire de forme 36 puis l'utilisateur enfonce la touche 39a permettant de mettre en circuit l'élément chauffant contenu dans l'outil 39 pour chauffer l'anneau 36 qui se contracte à partir de la température minimum déterminée pour que le retrait axial de l'ensemble constitué par la bague 34 et l'anneau 36 puisse s'effectuer comme représenté en figure 15E.

Le dispositif de protection antivol tel que décrit ci-dessus dans les différents modes de réalisation utilise comme alliage constituant l'organe à mémoire de forme du nickel-titane, mais il est bien entendu que tout autre alliage à mémoire de forme accomplissant la même fonction peut être utilisé. En outre, la vis de fixation 2 peut être remplacée par un écrou faisant partie d'un goujon de fixation de la jante au moyeu de roue et jouant le rôle de la tête de vis 4.

## Revendications

1. Dispositif de protection antivol pour une roue de véhicule montée sur le moyeu de roue au moyen d'au moins un élément fileté de fixation amovible (2) manoeuvrable par un outil, comprenant au moins un organe à mémoire de forme thermosensible et un obstacle (1 ; 16 ; 26 ; 34), sélectivement amovible, à l'accès de l'élément de fixation (2) par l'outil, cet obstacle étant immobilisé en position d'utilisation par l'organe à mémoire de forme thermosensible (15 ; 20 ; 28 ; 36) permettant, par chauffage à une température minimum déterminée, de débloquer l'obstacle.

2. Dispositif selon la revendication 1, **caractérisé en ce que** l'obstacle comprend un capuchon (1) coiffant l'élément fileté de fixation (2) et constitué d'une partie externe (6) et d'une partie interne (10) pouvant pivoter de façon limitée dans la partie externe (6) autour d'un axe longitudinal de pivotement (11) entre une position de verrouillage du capuchon (1) à l'élément fileté de fixation (2) sous l'action d'un premier couple de forces exercé sur la partie interne (10) par deux ressorts (13) disposés symétriquement à l'axe de pivotement (11) de façon à empêcher le retrait axial du capuchon (1) et une position de déverrouillage sous l'action d'un deuxième couple de forces, opposé et supérieur au premier couple de forces, exercé par deux organes à mémoire de formes thermosensibles (15) symétriques à l'axe de pivotement (11) et chauffés à la température minimum déterminée de façon à permettre le retrait axial du capuchon (1) de l'élément fileté de fixation (2).

3. Dispositif selon la revendication 1, **caractérisé en ce que** les deux organes à mémoire de forme (15) sont montés sur la partie interne (10) du capuchon (1) et sont constitués chacun par une lame cintrée en alliage, de préférence de nickel-titane.

4. Dispositif selon la revendication 2 ou 3, **caractérisé en ce que** les deux ressorts de rappel (13) sont montés sur la partie interne (10) du capuchon (1) et sont constitués chacun par un ressort en épingle (13) dont les deux branches (13a) sont en appui précontraint respectivement sur une paroi de butée radialement interne (10a) de la partie interne (10) du capuchon (1) et une paroi de butée radialement interne (6a) de la partie externe (6) de celui-ci et la spire (13b) de liaison des deux branches (13a) est montée autour d'un axe (10b) de la partie interne (10) parallèle à l'axe de pivotement (11) de celle-ci, de façon à rappeler élastiquement la partie interne (10) vers une paroi de butée (6b) de la partie externe (6) et restituer la forme initiale de chaque organe à mémoire de forme (15) après refroidissement de celui-ci.

5. Dispositif selon la revendication 4, **caractérisé en ce que** chaque lame à mémoire de forme (15) a l'une de ses extrémités maintenue entre deux parois parallèles radialement internes (6a) de la partie externe du capuchon (1) et son autre extrémité située entre la paroi de butée (6b) de la partie externe (6) vers laquelle vient en appui la partie interne (6) en position de verrouillage et la paroi de butée (10a) de la partie interne (10) sur laquelle est en appui la branche correspondante (13a) du ressort en épingle (13).

6. Dispositif selon l'une des revendications 2 à 5, **caractérisé en ce que** les moyens de verrouillage de la partie interne (10) du capuchon (1) à l'élément fileté de fixation (2) comprennent deux pattes symétriques (12) à ergots de verrouillage radialement interne (12a) s'engageant respectivement dans deux portions de gorges diamétralement opposées (14) de l'élément fileté de fixation (2) en position de verrouillage, les deux ergots de verrouillage (12a) pouvant coulisser dans les deux portions de gorges (14) lors du pivotement de la partie interne (10) jusqu'à sa position de verrouillage à laquelle ils sont libérés des portions de gorges (14) pour permettre le retrait axial du capuchon (1).

7. Dispositif selon l'une des revendications 2 à 6, **caractérisé en ce que** les parties interne (10) et externe (6) du capuchon (1) sont fixées amoviblement l'une à l'autre par deux pattes latérales flexibles diamétralement opposées (8) découpées dans la paroi latérale annulaire de la partie externe (6) du capuchon (1) et comportant à leurs extrémités inférieures des saillies de verrouillage (9) coopérant avec la partie interne (10) pour la bloquer axialement dans la partie externe (6) du capuchon (1).

8. Dispositif selon l'une des revendications 2 à 7, **caractérisé en ce que** les parties interne (10) et externe (6) du capuchon (1) sont réalisées en zamak nickelé.

9. Dispositif selon l'une des revendications 2 à 8, **caractérisé en ce qu'**il comprend un moyen préhenseur et de chauffage du capuchon (1) permettant de retirer le capuchon (1) de l'élément fileté de fixation (2) lors du chauffage des deux organes à mémoire de forme (15) à la température minimum prédéterminée.

10. Dispositif selon la revendication 1, **caractérisé en ce que** l'obstacle comprend un capuchon (16) coiffant l'élément fileté de fixation (2) et fixé amoviblement à l'élément de fixation (2) en position d'utilisation par au moins un levier de verrouillage (17) monté pivotant dans le capuchon (1) et pouvant basculer à une position de déverrouillage sous la commande de l'organe à mémoire de forme thermosensible chauffé (20) pour permettre le retrait axial du capuchon (1) de l'élément fileté de fixation (2).

11. Dispositif selon la revendication 10, **caractérisé en ce que** le levier de verrouillage (17) comprend deux bras de levier (17a, 17b) coudés sensiblement à angle droit, respectivement un premier bras de levier (17a) sensiblement parallèle à l'axe longitudinal du capuchon (1) en position de verrouillage et comportant à son extrémité libre un ergot de verrouillage radialement interne (17a1) s'engageant dans un évidement conjugué (4b) de l'élément fileté de fixation (2) et un second bras de levier (17b) perpendiculaire audit axe longitudinal en position de verrouillage, l'organe à mémoire de forme (20) étant disposé entre le second bras de levier (17b) et la paroi supérieure de fermeture (16a) du capuchon (16) de façon à faire pivoter le premier bras de levier (17a) à sa position de déverrouillage lorsque l'organe (20) est chauffé à la température minimum déterminée.

12. Dispositif selon la revendication 11, **caractérisé en ce que** l'organe à mémoire de forme (20) est en forme de ressort hélicoïdal disposé coaxialement dans le capuchon (16) et s'allongeant lorsque chauffé à la température minimum déterminée.

13. Dispositif selon la revendication 11 ou 12, **caractérisé en ce que** le levier (17) est rappelé en position de verrouillage par un ressort (21) en forme de lame convexe interposée entre le second bras de levier (17a) et la paroi latérale du capuchon (16).

14. Dispositif selon l'une des revendications 10 à 13, **caractérisé en ce qu'**il comprend trois leviers de verrouillage (17) s'étendant angulairement à 120° les uns des autres autour de l'élément fileté de fixation (2) et l'organe à mémoire de forme (20) agit simultanément sur les trois leviers de verrouillage (17) pour les déverrouiller lorsque l'organe (20) est chauffé à la température minimum déterminée.

15. Dispositif selon l'une des revendications 10 à 14, **caractérisé en ce qu'**il comprend un moyen préhenseur et de chauffage du capuchon (16) permettant de retirer celui-ci de l'élément fileté de fixation (2) lors du chauffage de l'organe à mémoire de forme (20) à la température minimum déterminée.

16. Dispositif selon la revendication 1, **caractérisé en ce que** l'obstacle comprend un capuchon (26) coiffant l'élément fileté de fixation (2) et réalisé sous la forme d'un tronc de cône fendu longitudinalement de manière à constituer deux parties symétriques enserrant au niveau de la petite base du tronc de cône l'élément fileté de fixation (2) en étant verrouillées à celui-ci pour empêcher le retrait axial du capuchon (26) et pouvant être écartées élastiquement l'une de l'autre par l'organe à mémoire de forme (28) chauffé à la température minimum déterminée pour déverrouiller le capuchon (26) de l'élément fileté de fixation (2).

17. Dispositif selon la revendication 16, **caractérisé en ce que** l'organe à mémoire de forme (28) est constitué par une lame convexe à section sensiblement semi-circulaire disposée debout dans le capuchon (26) sur deux plaques semi-circulaires internes coplanaires (29) supportées respectivement sur deux épaulements semi-circulaires transversaux (26b) du tronc de cône (26) de façon qu'en chauffant l'organe à mémoire de forme (28) à la température minimum déterminée, celui-ci exerce sur les deux parties symétriques du tronc de cône (26) deux forces radiales opposées écartant ces deux parties à la position de déverrouillage du capuchon (26).

18. Dispositif selon la revendication 16 ou 17, **caractérisé en ce que** les deux parties symétriques du capuchon (26) comprennent chacune au moins une saillie radialement interne de verrouillage (26a) s'engageant en position de verrouillage dans un évidement conjugué (4a) de l'élément fileté de fixation (2).

19. Dispositif selon la revendication 17 ou 18, **caractérisé en ce que** les deux plaques semi-circulaires (29) sont réalisées en un matériau électriquement isolant et la lame à mémoire de forme (28) est logée dans le capuchon (26) en étant électriquement isolée de celui-ci.

20. Dispositif selon l'une des revendications 16 à 19, **caractérisé en ce qu'**il comprend un moyen de préhension et de chauffage (33) du capuchon (26) permettant de retirer le capuchon (26) de l'élément fileté de fixation (2) lors du chauffage de l'organe à mémoire de forme (28) à la température minimum déterminée.

21. Dispositif selon la revendication 1, **caractérisé en ce que** l'obstacle comprend une bague (34) logée dans un lamage (35) de la jante de roue (3) coaxialement à l'élément fileté de fixation (2) en entourant de façon adjacente cet élément et la bague (34) et immobilisée axialement dans le lamage (35) par l'organe à mémoire de forme en anneau (36) logé d'une part dans une gorge radialement externe (37) de la bague (34) et d'autre part dans une rainure circulaire (38) réalisée dans la paroi latérale de la jante (3) définissant le passage (5) de l'élément fileté de fixation (2) de façon à retenir axialement la bague (34) relativement à la jante (3) en position d'utilisation, l'anneau à mémoire de forme (36) se contractant par chauffage à la température minimum déterminée dans la gorge (37) de la bague (34) pour libérer axialement celle-ci.

22. Dispositif selon la revendication 21, **caractérisé en ce que** l'anneau à mémoire de forme (36) est fendu et a l'une de ses extrémités libres (36a) recourbée sensiblement à angle droit pénétrant dans un évidement conjugué (37a) au fond de la gorge (37) de la bague d'obstacle (34) de façon à permettre le rapprochement, à l'aide d'un outil approprié (39), des deux extrémités de l'anneau (36) et son montage dans la rainure circulaire (38).

23. Dispositif selon la revendication 21 ou 22, **caractérisé en ce que** l'outil (39) précité est également agencé comme moyen de préhension et de chauffage de la bague (34) permettant de retirer celle-ci et l'organe à mémoire de forme (36) lors du chauffage de cet organe à la température minimum déterminée.

## Patentansprüche

1. Diebstahlsicherungsvorrichtung für ein Kraftfahrzeugrad, das über zumindest ein durch ein Werkzeug betätigbares, lösbares Befestigungsgewindeelement (2) an der Radnabe gelagert ist, mit zumindest einem wärmeempfindlichen Speicherformglied und einem selektiv lösbaren Hindernis (1; 16; 26; 34) für den Zugang zum Befestigungsteil (2) mittels Werkzeug, wobei dieses Hindernis durch das wärmeempfindliche Speicherformglied (15; 20; 28; 36) in Gebrauchsstellung festgelegt wird, das gestattet, das Hindernis durch Erwärmung auf eine vorbestimmte Mindesttemperatur zu entsperren.

2. Vorrichtung nach Anspruch 1, **dadurch gekennzeichnet, dass** das Hindernis eine Kappe (1) enthält, die das Befestigungsgewindeelement (2) übergreift und aus einem Außenteil (6) und einem Innenteil (10) besteht, das im Außenteil (6) in begrenzter Weise um eine Schwenklängsachse (11) herum zwischen einer Stellung zum Verriegeln der Kappe (1) am Befestigungsgewindeelement (2) unter der Wirkung eines über zwei symmetrisch zur Schwenkachse (11) angeordnete Federn (13) auf das Innenteil (10) ausgeübten ersten Kräftepaars zum Verhindern des axialen Abziehens der Kappe (1) und einer Entriegelungsstellung unter der Wirkung eines zweiten Kräftepaars verschwenkbar ist, das dem ersten Kräftepaar entgegengesetzt und größer als dieses ist und über zwei wärmeempfindliche Speicherformglieder (15) ausgeübt wird, die symmetrisch zur Schwenkachse (11) liegen und auf die vorbestimmte Mindesttemperatur erwärmt werden, so dass sie das axiale Abziehen der Kappe (1) vom Befestigungsgewindeelement (2) gestatten.

3. Vorrichtung nach Anspruch 1, **dadurch gekennzeichnet, dass** die beiden Speicherformglieder (15) am Innenteil (10) der Kappe (1) gelagert sind und jeweils aus einem gebogenen Legierungsstreifen, vorzugsweise aus Nickel-Titan, bestehen.

4. Vorrichtung nach Anspruch 2 oder 3, **dadurch gekennzeichnet, dass** die beiden Rückstellfedern (13) am Innenteil (10) der Kappe (1) gelagert sind und jeweils aus einer Schnappfeder (13) bestehen, deren beide Schenkel (13a) sich unter Vorspannung an einer radial inneren Anschlagswand (10a) des Innenteils (10) der Kappe (1) bzw. einer radial inneren Anschlagswand (6a) des Außenteils (6) derselben abstützen und die Verbindungswindung (13b) der beiden Schenkel (13a) um eine Achse (10b) des Innenteils (10) herum gelagert ist, die parallel zur Schwenkachse (11) desselben verläuft, so dass das Innenteil (10) zur Anschlagswand (6b) des Außenteils (6) hin federnd zurückgestellt wird und die ursprüngliche Form eines jeden Speicherformglieds (15) nach dessen Abkühlung wieder hergestellt wird.

5. Vorrichtung nach Anspruch 4, **dadurch gekennzeichnet, dass** jeder Speicherformstreifen (15) an seinem einen Ende zwischen zwei parallelen, radial inneren Wänden (6a) des Außenteils der Kappe (1) festgehalten wird und an seinem anderen Ende zwischen der Anschlagswand (6b) des Außenteils (6), an die sich der Innenteil (6) in Verriegelungsstellung abstützt, und der Anschlagswand (10a) des Innenteils (10) liegt, an der sich der entsprechende Schenkel (13a) der Schnappfeder (13) abstützt.

6. Vorrichtung nach einem der Ansprüche 2 bis 5, **dadurch gekennzeichnet, dass** die Verriegelungsmittel zum Verriegeln des Innenteils (10) der Kappe (1) am Befestigungsgewindeelement (2) zwei symmetrische Laschen (12) mit Zapfen (12a) zur radial inneren Verrieglung enthalten, die in zwei jeweilige diametral gegenüberliegende Nutbereiche (14) des Befestigungsgewindeelements (2) in Verriegelungsstellung eingreifen, wobei die beiden Verriegelungszapfen (12a) beim Verschwenken des Innenteils (10) in seine Verrieglungsstellung in den beiden Nutbereichen (14) gleitbeweglich sind, in welcher Stellung sie von den Nutbereichen (14) freigegeben sind, um das axiale Abziehen der Kappe (1) zu gestatten.

7. Vorrichtung nach einem der Ansprüche 2 bis 6, **dadurch gekennzeichnet, dass** das Innenteil (10) und das Außenteil (6) der Kappe (1) über zwei diametral gegenüberliegende, flexible Seitenlaschen (8) lösbar aneinander befestigt sind, die in der ringförmigen Seitenwand des Außenteils (6) der Kappe (1) ausgeschnitten sind und an ihren unteren Enden Verriegelungsvorsprünge (9) enthalten, die mit dem Innenteil (10) zusammenwirken, um dieses axial im Außenteil (6) der Kappe (1) zu sichern.

8. Vorrichtung nach einem der Ansprüche 2 bis 7, **dadurch gekennzeichnet, dass** das Innenteil (10) und das Außenteil (6) der Kappe (1) aus vernickeltem Zamak hergestellt sind.

9. Vorrichtung nach einem der Ansprüche 2 bis 8, **dadurch gekennzeichnet, dass** sie ein Mittel zum Ergreifen und Erhitzen der Kappe (1) enthält, mit dem die Kappe (1) beim Erhitzen der beiden Speicherformglieder (15) auf die vorbestimmte Mindesttemperatur vom Befestigungsgewindeelement (2) abgezogen werden kann.

10. Vorrichtung nach Anspruch 1, **dadurch gekennzeichnet, dass** das Hindernis eine Kappe (16) enthält, die das Befestigungsgewindeelement (2) übergreift und in Gebrauchsstellung über einen Verriegelungshebel (17) lösbar am Befestigungselement (2) befestigt ist, der in der Kappe (1) schwenkbeweglich gelagert ist und mit Betätigung des erhitzten, wärmeempfindlichen Speicherformglieds (20) in eine Entriegelungsstellung kippbar ist, um das axiale Abziehen der Kappe (1) vom Befestigungsgewindeelements (2) zu gestatten.

11. Vorrichtung nach Anspruch 10, **dadurch gekennzeichnet, dass** der Verrieglungshebel (17) zwei Hebelarme (17a, 17b) enthält, die im wesentlichen im rechten Winkel gekrümmt sind, nämlich einen ersten Hebelarm (17a), der in Verrieglungsstellung im wesentlichen parallel zur Längsachse der Kappe (1) verläuft und an seinem freien Ende einen radial inneren Verriegelungszapfen (17a1) enthält, der in eine zugeordnete Ausnehmung (4b) des Befestigungsgewindeelements (2) eingreift, und einen zweiten Hebelarm (17b), der in Verriegelungsstellung senkrecht zur genannten Längsachse verläuft, wobei das Speicherformglied (20) zwischen dem zweiten Hebelarm (17b) und der oberen Schließwand (16a) der Kappe (16) so angeordnet ist, dass es den ersten Hebelarm (17a) in seine Entriegelungsstellung verschwenkt, wenn das Glied (20) auf die vorbestimmte Mindesttemperatur erhitzt wird.

12. Vorrichtung nach Anspruch 11, **dadurch gekennzeichnet, dass** das Speicherformglied (20) in Form einer Spiralfeder vorliegt, die koaxial in der Kappe (16) angeordnet ist und sich ausdehnt, wenn sie auf die vorbestimmte Mindesttemperatur erhitzt wird.

13. Vorrichtung nach Anspruch 11 oder 12, **dadurch gekennzeichnet, dass** der Hebel (17) über eine Feder (21) in Form einer konvexen Blattfeder in die Verriegelungsstellung zurückgestellt wird, die zwischen dem zweiten Hebelarm (17a) und der Seitenwand der Kappe (16) eingefügt ist.

14. Vorrichtung nach einem der Ansprüche 10 bis 13, **dadurch gekennzeichnet, dass** sie drei Verriegelungshebel (17) enthält, die sich in einem Winkel von 120° zueinander um das Befestigungsgewindeelement (2) herum erstrecken, und das Speicherformglied (20) gleichzeitig auf die drei Verriegelungshebel (17) einwirkt, um sie zu entriegeln, wenn das Glied (20) auf die vorbestimmte Mindesttemperatur erhitzt wird.

15. Vorrichtung nach einem der Ansprüche 10 bis 14, **dadurch gekennzeichnet, dass** sie ein Mittel zum Ergreifen und Erhitzen der Kappe (16) enthält, mit dem diese beim Erhitzen des Speicherformglieds (20) auf die vorbestimmte Mindesttemperatur vom Befestigungsgewindeelement (2) abgezogen werden kann.

16. Vorrichtung nach Anspruch 1, **dadurch gekennzeichnet, dass** das Hindernis eine Kappe (26) enthält, die das Befestigungsgewindeelement (2) übergreift und in Form eines längs gespaltenen Kegelstumpfs ausgebildet ist, so dass sie zwei symmetrische Teile bildet, die im Bereich der kleineren Grundfläche des Kegelstumpfes das Befestigungsgewindeelement (2) einklemmen, wobei sie mit diesem verriegelt sind, um das axiale Abziehen der Kappe (26) zu verhindern, und die über das auf die vorbestimmte Mindesttemperatur erhitzte Speicherformglied (28) elastisch voneinander aufgespreizt werden können, um die Kappe (26) vom Befestigungsgewindeelement (2) zu entriegeln.

17. Vorrichtung nach Anspruch 16, **dadurch gekennzeichnet, dass** das Speicherformglied (28) aus einer konvexen Blattfeder mit im wesentlichen halbkreisförmigem Querschnitt besteht, die in der Kappe (26) auf zwei inneren, koplanaren, halbkreisförmigen Platten (29) stehend angeordnet ist, die auf zwei jeweilige halbkreisförmige, querverlaufende Schultern (26b) des Kegelstumpfes (26) so getragen werden, dass bei Erhitzung des Speicherformglieds (28) auf die vorbestimmte Mindesttemperatur dieses auf die beiden symmetrischen Teile des Kegelstumpfes (26) zwei entgegengesetzte, radiale Kräfte ausübt, welche diese beiden Teile in die Entriegelungsstellung der Kappe (26) aufspreizen.

18. Vorrichtung nach Anspruch 16 oder 17, **dadurch gekennzeichnet, dass** die beiden symmetrischen Teile der Kappe (26) jeweils zumindest einen radial inneren Verriegelungsvorsprung (26a) enthalten, der in Verrieglungsstellung in eine zugeordnete Ausnehmung (4a) des Befestigungsgewindeelements (2) eingreift.

19. Vorrichtung nach Anspruch 17 oder 18, **dadurch gekennzeichnet, dass** die beiden halbkreisförmigen Platten (29) aus einem elektrisch isolierenden Material hergestellt sind und die Speicherformblattfeder (28) in der Kappe (26) aufgenommen ist, indem sie von dieser elektrisch isoliert ist.

20. Vorrichtung nach einem der Ansprüche 16 bis 19, **dadurch gekennzeichnet, dass** sie ein Mittel (33) zum Ergreifen und Erhitzen der Kappe (26) enthält, mit dem die Kappe (26) beim Erhitzen des Speicherformglieds (28) auf die vorbestimmte Mindesttemperatur vom Befestigungsgewindeelement (2) abgezogen werden kann.

21. Vorrichtung nach Anspruch 1, **dadurch gekennzeichnet, dass** das Hindernis einen Ring (34) enthält, der in einer Senkung (35) der Radfelge (3) koaxial zum Befestigungsgewindeelement (2) aufgenommen ist, indem er dieses Element angrenzend umschließt, und der Ring (34) axial in der Senkung (35) vom ringförmigen Speicherformglied (36) festgelegt wird, das einerseits in einer radial äußeren Nut (37) des Rings (34) und andererseits in einer kreisrunden Rille (38) aufgenommen ist, welche in der Seitenwand der Felge (3) ausgeführt ist und den Durchtritt (5) des Befestigungsgewindeelements (2) definiert, so dass sie in Gebrauchsstellung den Ring (34) bezüglich der Felge (3) axial hält, wobei der Speicherformring (36) sich durch Erhitzen auf die vorbestimmte Mindesttemperatur in der Nut (37) des Rings (34) zusammenzieht, um diesen axial freizugeben.

22. Vorrichtung nach Anspruch 21, **dadurch gekennzeichnet, dass** der Speicherformring (36) gespalten ist und am einen seiner freien Enden (36a) im wesentlichen rechtwinklig gekrümmt ist, welches Ende in eine zugeordnete Ausnehmung (37a) im Boden der Nut (37) des Hindernisrings (34) so eindringt, dass er mit Hilfe eines geeigneten Werkzeugs (39) die Annäherung der beiden Enden des Rings (36) und dessen Einbau in die kreisrunde Rille (38) ermöglicht.

23. Vorrichtung nach Anspruch 21 oder 22, **dadurch gekennzeichnet, dass** das genannte Werkzeug (39) auch als Mittel zum Ergreifen und Erhitzen des Rings (34) vorgesehen ist, wodurch dieser und das Speicherformglied (36) beim Erhitzen dieses Glieds auf die vorbestimmte Mindesttemperatur abgezogen werden können.

## Claims

1. An anti-theft protection device for a vehicle wheel, which is mounted on a wheel hub by means of at least one removable, threaded, fixing element (2) which can be manipulated by a tool, comprising at least one thermo-sensitive shape memory element and an obstacle (1; 16; 26; 34), which can be selectively removed and which prevents access to the fixing element (2) by the tool, said obstacle being immobilised in its position of use by a thermo-sensitive shape memory element (15; 20; 28; 36), which by heating to a specific minimum temperature enables the obstacle to be unlocked.

2. A device according to claim 1, **characterised in that** the obstacle comprises a cap (1) which covers the threaded fixing element (2) and which is formed by an external part (6) and an internal part (10) which is capable of pivoting in a limited manner in the external part (6) about a longitudinal pivoting axis (11) between a position in which the cap (1) is locked to the threaded fixing element (2) under the action of a first force couple exerted on the internal part (10) by two springs (13) which are disposed symmetrically to the pivoting axis (11) so as to prevent the axial withdrawal of the cap (1), and an unlocking position under the action of a second force couple, which is opposite to and greater than the first force couple and which is exerted by two thermo-sensitive shape memory elements (15) which are symmetrical to the pivoting axis (11) and which are heated to the specific minimum temperature so as to permit the axial withdrawal of the cap (1) from the threaded fixing element (2).

3. A device according to claim 1, **characterised in that** the two shape memory elements (15) are mounted on the internal part (10) of the cap (1) and are each formed by a curved alloy sheet, preferably made of nickel-titanium.

4. A device according to claim 2 or 3, **characterised in that** the two return springs (13) are mounted on the internal part (10) of the cap (1) and are each formed by a torsion spring (13), the two limbs (13a) of which bear under a mechanical bias against a radially internal stop wall (10a) of the internal part (10) of the cap (1) and against a radially internal stop wall (6a) of the external part (6) of the latter, respectively, and the turn (13b) connecting the two limbs (13a) is mounted about a pin (10b) of the internal part (10) parallel to the pivoting axis (11) of the latter so as elastically to return the internal part (10) to a stop wall (6b) on the external part (6) and to restore the initial shape of each shape memory element (15) after the cooling of the latter.

5. A device according to claim 4, **characterised in that** each shape memory sheet (15) has one of its ends held between two radially internal parallel walls (6a) of the external part of the cap (1) and has its other end situated between the stop wall (6b) of the external part (6) against which the internal part (6) bears in the locking position, and the stop wall (10a) of the internal part (10) against which the corresponding limb (13a) of the torsion spring (13) bears.

6. A device according to any one of claims 2 to 5, **characterised in that** the means for locking the internal part (10) of the cap (1) to the threaded fixing element (2) comprise two symmetrical legs (12) with radially internal locking lugs (12a) which engage respectively in two diametrically opposite groove portions (14) of the threaded fixing element (2) in the locking position, said two locking lugs (12a) being capable of sliding in the two groove portions (14) during the pivoting of the internal part (10) as far as its locking position, in which they are released from the groove portions (14) to permit the axial withdrawal of the cap (1).

7. A device according to any one of claims 2 to 6, **characterised in that** the internal part (10) and external part (6) of the cap (1) are removably fixed to each other by two diametrically opposite, flexible lateral legs (8), which are cut in the annular sidewall of the external part (6) of the cap (1) and which at their lower ends comprise locking projections (9) which cooperate with the internal part (10) in order to lock the latter axially in the external part (6) of the cap (1).

8. A device according to any one of claims 2 to 7, **characterised in that** the internal part (10) and the external part (6) of the cap (1) are made of nickel-plated zinc die-casting alloy.

9. A device according to any one of claims 2 to 8, **characterised in that** it comprises a means for gripping and heating the cap (1) which enables the cap (1) to be withdrawn from the threaded fixing element (2) when the two shape memory elements (15) are heated to the specific minimum temperature.

10. A device according to claim 1, **characterised in that** the obstacle comprises a cap (16) which covers the threaded fixing element (2) and which is removably fixed to the fixing element (2) in the position of use by at least one locking lever (17) which is mounted pivoting in the cap (1) and which is capable of swinging back to an unlocking position under the control of the heated thermo-sensitive shape memory element (20) in order to permit the axial withdrawal of the cap (1) from the threaded fixing element (2).

11. A device according to claim 10, **characterised in that** the locking lever (17) comprises two lever arms (17a, 17b) which are bent substantially at a right angle, namely a first lever arm (17a) which is substantially parallel to the longitudinal axis of the cap (1) in the locking position and which at its free end comprises a radially internal locking lug which fits into a conjugate recess (4b) in the threaded fixing element (2), and a second lever arm (17b) which is perpendicular to said longitudinal axis in the locking position, the shape memory element (20) being disposed between the second lever arm (17b) and the top closure wall (16a) of the cap (16) so as to cause the first lever arm (17a) to pivot to its unlocking position when the element (20) is heated to the specified minimum temperature.

12. A device according to claim 11, **characterised in that** the shape memory element (20) is in the form of a helical spring which is coaxially disposed in the cap (16) and which lengthens when heated to the specific minimum temperature.

13. A device according to claim 11 or 12, **characterised in that** the lever (17) is returned to the locking position by a spring (21) in the form of a convex sheet interposed between the second lever arm (17a) and the sidewall of the cap (16).

14. A device according to any one of claims 10 to 13, **characterised in that** it comprises three locking levers (17) which exiend angles of 120° to each other around the threaded fixing element (2), and the shape memory element (20) acts simultaneously on the three locking levers (17) in order to unlock them when the element (20) is heated to the specific minimum temperature.

15. A device according to any one of claims 10 to 14, **characterised in that** it comprises a means for gripping and heating the cap (16) which enables the latter to be withdrawn from the threaded fixing element (2) when the shape memory element (20) is heated to the specific minimum temperature.

16. A device according to claim 1, **characterised in that** the obstacle comprises a cap (26) which covers the threaded fixing element (2) and which is produced in the form of a truncated cone which is slit longitudinally so as to form two symmetrical parts which at the small base of the truncated cone embrace the threaded fixing element (2) and are locked to the latter to prevent the axial withdrawal of the cap (26) and which are capable of being moved apart elastically from each other by the shape memory element (28) which is heated to the specific minimum temperature, in order to unlock the cap (26) from the threaded fixing element (2).

17. A device according to claim 16, **characterised in that** the shape memory element (28) is formed by a convex sheet of substantially semicircular cross-section which is disposed on edge in the cap (26) on two internal, coplanar, semicircular plates (29) which are respectively supported on two transverse, semicircular shoulders (26b) of the truncated cone (26) so that when the shape memory element (28) is heated to the specific minimum temperature the latter exerts two opposing radial forces on the two symmetrical parts of the truncated cone (26), which forces move said two parts apart to the unlocking position of the cap (26).

18. A device according to claim 16 or 17, **characterised in that** the two symmetrical parts of the cap (26) each comprise at least one radially internal locking projection (26a) which in the locking position fits into a conjugate recess (4a) in the threaded fixing element (2).

19. A device according to claim 17 or 18, **characterised in that** the two semicircular plates (29) are made of an electrically insulating material and the shape memory sheet (28) is accommodated in the cap (26) whilst being electrically insulated from the latter.

20. A device according to any one of claims 16 to 19, **characterised it** comprises a means (33) for gripping and heating the cap (26) which enables the cap (26) to be withdrawn from the threaded fixing element (2) when the shape memory element (28) is heated to the specific minimum temperature.

21. A device according to claim 1, **characterised in that** the obstacle comprises a ring (34) which is accommodated in a countersunk portion (35) of the wheel rim, coaxially with the threaded fixing element (2), and which adjacently surrounds said element, and the ring (34) is axially immobilised in the countersunk portion (35) by the shape memory element which is in the form of a ring (36) which is accommodated firstly in a radially external groove (37) in the ring (34) and secondly in a circular groove (38) which is formed in the sidewall of the rim (3) and which defines the clearance (5) for the threaded fixing element so that it axially retains the ring (34) in its position of use in relation to the rim (3), the shape memory ring (36) contracting on heating to the specified minimum temperature in the groove (37) of the ring (34) in order to release the latter axially.

22. A device according to claim 21, **characterised in that** the shape memory ring (36) is split at one of its free ends (36a) and is curved substantially at a right angle and penetrates a conjugate recess (37a) at the base of the groove (37) of the obstacle ring (34) so as to permit the approach, with the aid of an appropriate tool (39), of the two ends of the ring (36) and the mounting thereof in the circular groove (38).

23. A device according to claim 21 or 22, **characterised in that** the aforementioned tool (39) is also provided as a means for gripping and heating the ring (34) which enables the latter and the shape memory element (36 ) to be withdrawn when said element is heated to the specified minimum temperature.
